# EUROPEAN PATENT APPLICATION

(11) **EP 1 942 565 A2**
(43) Date of publication of application: **09.07.2008**
(21) Application number: 07019456.8
(22) Date of filing: 04.10.2007
(51) Int. Cl.: H01S 3/067, H01S 3/13

(54) **Method and apparatus for controlling an optical amplifier for use in an passive optical network**

(30) Priority: 08.12.2006 US 608437
(71) Applicant: GENERAL INSTRUMENT CORPORATION, Horsham, Pennsylvania 19044 (US)
(72) Inventor: Li, Ruoding, Carlisle Massachusetts 01741 (US); Effenberger, Frank J., Freehold New Jersey 07728 (US); Grossmann, Daniel B., Norwood Massachusetts 02062 (US); Weeks, William, Ivyland Pennsylvania 18974 (US)
(74) Representative: Openshaw, Paul Malcolm

(57) **Abstract**

An optical amplifier including an input port and an output port which are coupled together via a data signal line; an amplifier circuit; a gain control circuit coupled to the data signal line and operative for detecting the power level of a burst signal input into the optical amplifier at the input port; and a dummy laser generation circuit having an output coupled to the data signal line and an input coupled to the gain control circuit; where the gain control circuit is operative for controlling the power level output by the dummy laser generation circuit so as to maintain the power level of a signal input into the amplifier circuit at a substantially constant level.

## Description

### Field Of The Invention

The present invention relates to a method and apparatus for controlling an optical amplifier for use in a passive optical network, and more specifically, to a method and apparatus for maintaining the input power level to the optical amplifier at a substantially constant level when the passive optical network is processing burst signals.

### Background Of Invention

Various current communication systems utilize passive optical network (PON) technology. Network operators presently utilize PONs to provide broadband communications services, such as data, subscription television and telephony, to homes and small businesses. Such PON systems typically can support a maximum optical fiber reach of 20 km (i.e., from the central office to the subscriber), and a maximum "split ratio" of 32 subscribers per feeder fiber. These limits are due to limitations in optical transmitter power output and optical receiver sensitivity. One way to extend the reach and increase the split ratio of a PON is to use optical amplifiers to compensate for the additional fiber and optical splitter losses.

Erbium-doped fiber amplifiers (EDFA) are widely used to compensate optical power loss, e.g., due to loss in optical fiber, in the long-haul and metro optical transport systems. EDFAs provide optical amplification for optical signals in the 1530 nm to 1561 nm window, which is know in the art as the "C-band". Given the wide commercial availability of EDFAs, it is desirable to explore their application in the PON as a cost effective way to extend reach and/or support larger split ratios.

Existing PONs typically operate on a wavelength plan of approximately 1490 nm in the downstream direction, and 1310 nm in the upstream direction. In order to use EDFAs for PON applications, a modified wavelength plan is needed. A possible modified wavelength plan utilizes the so-called dense wavelength division multiplexed channels "DWDM" from 1530 nm to 1536 nm in 100 GHz spacing as downstream channels. For the upstream channels, one so-called coarse wavelength division multiplexed channel "CWDM", which is centered at 1550 nm, is utilized. It is noted that the frequency of the CWDM channel can change from 1540 nm to 1560 nm depending on environmental conditions such as temperature. DWDM and CWDM channels differ in their bandwidth and thus inter-channel spacing. Since CWDM channels are wider, they may be driven by less sophisticated lasers. Since both the downstream and the upstream optical signals fall into the EDFA amplification band, both can be amplified by EDFAs in the PON design.

However, a problem arises due to the relatively slow relaxation time of the dynamic response of the EDFA gain. An EDFA used in long-haul and/or metro optical transport systems is typically specified to handle a constant signal power. Such an EDFA can be used to amplify the PON downstream optical signal. However, for the upstream direction, the input signal power level to the EDFA varies significantly (e.g., over a 20 dB range) and in a dynamic fashion (i.e., over ns timescales), due to the burst nature of the time division multiple access "TDMA" PON protocol, differential reach, and transmitter tolerance range. Existing EDFA designs are not suitable for burst mode operation. Accordingly, improvements are needed to overcome the transient dynamic of the EDFA response for upstream burst signals.

Prior art techniques for the control of EDFAs deal primarily with EDFAs used in DWDM long-haul and/or metro transport systems. Such systems carry a constant bit rate, constant power optical signals, typically those known in the art as OC-48 or OC-192. The known EDFA gain control systems deal with a situation that arises when the network contains one or more add-drop multiplexers (ADMs). Specifically, when an ADM drops or adds a signal to such a network, the aggregate optical power level changes. As such, the EDFA gain must be stabilized to compensate for these changes, and the prior art techniques provide a method for doing so. However, these prior art compensation schemes do not address the problems associated with highly dynamic burst operation as described above.

Thus, there remains a need for a method and system for solving the problems associated with processing highly dynamic burst signals by EDFAs in a PON design.

### Summary Of Invention

Accordingly, the present invention relates to a system and method for utilizing EDFAs in a PON design, which allows for the transmission of highly dynamic burst signals without any degradation in system performance.

More specifically, the present invention relates to an optical amplifier including an input port and an output port which are coupled together via a main signal line; an amplifier circuit; a gain control circuit coupled to the main signal line and operative for detecting the power level of a burst signal input into the optical amplifier at the input port; and a dummy laser generation circuit having an output coupled to the main signal line and an input coupled to the gain control circuit. In accordance with the operation of the present invention, the gain control circuit is operative for controlling the power level output by the dummy laser generation circuit so as to maintain the power level of a signal input into the amplifier circuit at a substantially constant level.

The present invention also relates to a method for controlling the power level input into an optical amplifier. The method includes the steps of detecting the power level of a burst signal to be input into an amplifier circuit of the optical amplifier, where the burst signal is detected at an input port of the optical amplifier; coupling a dummy laser generation signal to the input port of the optical amplifier; and controlling the power level of a signal output by the dummy laser generation circuit so as to maintain the power level of a signal formed by the combination of the burst input signal and the dummy laser generation signal at a substantially constant level. This combination signal, which exhibits a substantially constant level, is then input into the amplifier circuit.

The present invention provides significant advantages over the prior art systems. Most importantly, the present invention provides a PON design that provides for the processing of upstream burst data signals while maintaining a constant input power level to the EDFA contained in the PON design. The system also prevents a large dynamic transient response at the EDFA, and substantially eliminates distortion introduced by the transient response. Another advantage of the present invention is that it provides for an increase of the allowable PON split ratio as compared to prior art system.

Additional advantages of the present invention will become apparent to those skilled in the art from the following detailed description of exemplary embodiments of the present invention.

The invention itself, together with further objects and advantages, can be better understood by reference to the following detailed description and the accompanying drawings.

### Brief Description Of The Drawings

The following drawings serve to illustrate the principles of the invention.

Fig. 1 illustrates an exemplary prior art PON design.

Fig. 2a illustrates an exemplary burst data signal input into the EDFA contained in the PON design of Fig. 1.

Fig. 2b illustrates the distorted output signal generated by the EDFA contained in the PON design of Fig. 1 in response to the input signal of Fig. 2a.

Fig. 3 illustrates a prior art EDFA configuration.

Fig. 4 illustrates an exemplary embodiment of an EDFA circuit in accordance with the present invention.

Fig. 5a illustrates an example of an upstream burst data signal.

Fig. 5b illustrates a modulated dummy laser signal generated by the present invention in accordance with the one embodiment of the present invention.

Fig. 6 illustrates another exemplary embodiment of the present invention.

Fig. 7 illustrates the operation of the embodiment of the present invention illustrated in Fig. 6.

Fig. 8 illustrates another exemplary embodiment of the present invention, which allows for the use of the dummy laser signal for monitoring purposes.

### Detailed Description Of The Invention

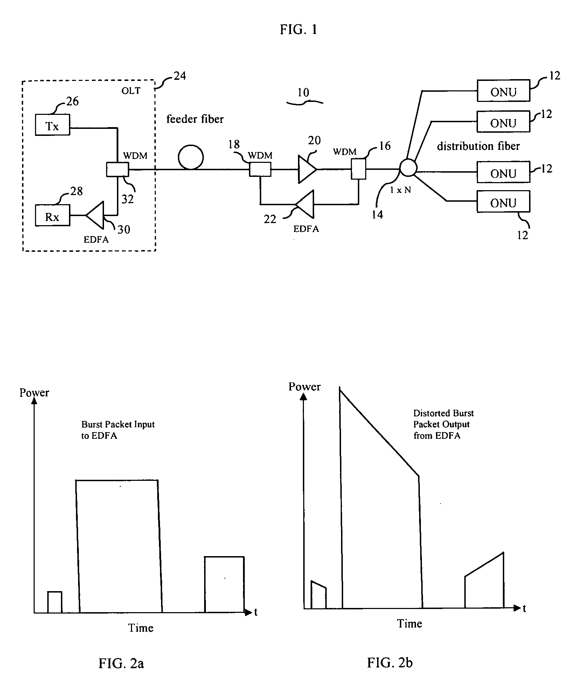

Prior to discussing the present invention, a brief discussion of PON designs and EDFA control circuits is provided to facilitate an understanding of the present invention. Fig. 1 illustrates a typical amplified PON system 10. Referring to Fig. 1, the system includes an optical network unit (ONU) 12, a 1xN optical coupler 14 (as a variation, 2xN optical couplers are utilized in protected PON designs), a first wavelength division multiplexer (WDM) 16 and a second wavelength division multiplexer 18, which are coupled to a first EDFA 20 and a second EDFA 22. In the given embodiment, the first EDFA 20 amplifies signals propagating in the downstream direction, and the second EDFA 22 amplifies signals propagating in the upstream direction. The system 10 further includes a optical line terminator OLT 24, which is located in the central office. As shown, the OLT includes a transmitter 26, a receiver 28, an EDFA 30 for amplifying received signals, and a WDM 32, which couples both the transmitter 26 and the receiver 28 to the feeder fiber.

With respect to the operation, when an ONU 12 has data to send, and further has received a transmission grant as defined in the PON protocol, the ONU 12 sends a burst of data in the upstream direction, through one (or more) EDFA optical amplifier 22 to the OLT 24 in the central office. The amplified PON 10 has a plurality of ONUs 12 coupled to the first EDFA 22 and feeder fiber by the N-port optical coupler 14. Therefore, the signal at the input to the EDFA is series of bursts, composed of, for example, high speed on-off keying (OOK) modulated data. These data bursts have a limited duration, typically on the order of a few µsec to tens of µsec.

More specifically, when data is transmitted in the upstream direction, the coupler 14 combines the output signals from the ONUs 12, and couples the combined signal to the input of the first upstream EDFA 22, by way of the WDM filter 16. The received power level at the first upstream EDFA 22 may vary between ONUs, due, for example, to differences in the lengths of distribution fibers, tolerance of ONU transmitter power specifications and to aging of ONU components. Thus, the upstream input signal at the EDFA 22 will have a wide dynamic range over timescales of the order of 1 µsec to 100 µsec or more. Such a wide dynamic range is difficult for existing EDFAs to control, resulting in high distortion of the amplified signal at the EDFA output.

Fig. 2a and 2b illustrate an exemplary burst signal generated by ONUs 12, and an exemplary response of the EDFA 22 to the upstream burst signal, respectively. Specifically, Fig. 2a shows a typical sequence of burst input signals from different ONUs, and Fig. 2b shows the distorted signal output from by the EDFA 22. It is noted that only average power is shown in Figs. 2a and 2b. Output distortion occurs in existing EDFA designs regardless of whether the EDFAs incorporate a constant gain control circuit (i.e., an AGC) or a constant power control circuit. This distortion also occurs regardless of the EDFA's operating point, i.e., whether it is in a linear or a saturated range. In a typical case, a 15 dB input burst power range may result in an approximately 15 dB power difference from the leading edge to the trailing edge of a burst at the output of the EDFA, as is shown in Fig. 2b. At the upstream receiver 28 contained in the OLT 24, such a change in the received power level during a burst makes it difficult to set the receiver threshold in order to discriminate the OOK signal.

In the existing designs, an EDFA can only adjust its pump laser to the changing input level of the burst signal to maintain either constant gain (AGC) or constant power (APC) operation. However, due to the slow response of the erbium-doped fiber, even if the pump power can be controlled quickly enough to follow the changing signal level, the carrier population level of the erbium-doped fiber has a relaxation time too long to allow the system to follow the signal. The resulting signal difference from the leading edge to the trailing edge, as shown for example in Fig. 2b, can be as high as 6 dB or more.

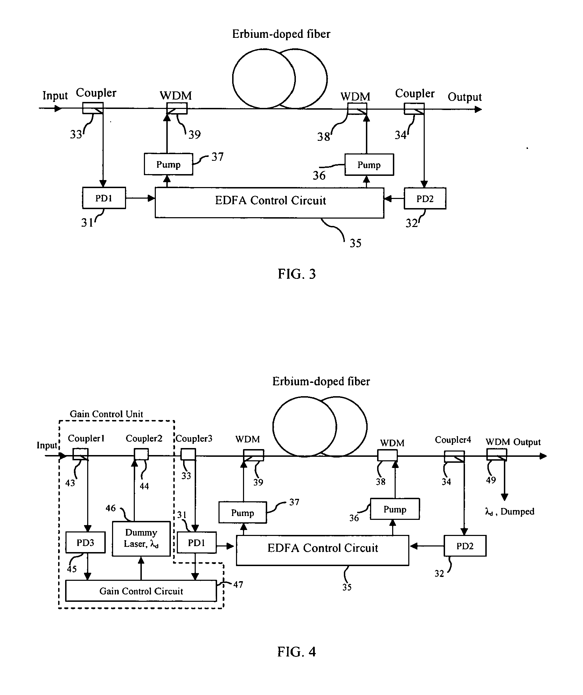

Fig. 3 illustrates a typical configuration of an EDFA (also referred to as an EDFA amplifier circuit), as used in a variety of applications in optical fiber communications. Referring to Fig. 3, the input and output signal power levels are detected by photo detectors PD1 31 and PD2 32, which receive a portion of the input and output signals, respectively, by way of optical power couplers 33 and 34 . The EDFA is set to a pre-determined gain or output power level by an EDFA control circuit 35, which compares the input and output detected signal power levels, using the difference in a feedback control loop to increase or decrease the output power of the pump lasers 36 and 37. The pump lasers 36 and 37 are coupled to the data signal line of the EDFA via a first and second WDM 38 and 39.

A typical response time of the EDFA shown in Fig. 3 is about 0.1 msec. As described above, for a high bit rate continuous signal, the EDFA response is affected only by the average input power and not by OOK modulated data. In a PON application, the signal is in a burst-mode, with differing power levels, long idle periods between bursts and burst durations ranging from a few µsec to somewhat less than 100 µsec. Thus, the slow dynamic response of the EDFA will result in the distortion of the burst signal as shown in Fig. 2b, and cause power variations within the burst envelope. The resulting signal degradation reduces the receiver dynamic range, resulting in a high bit error rate. In addition, long inter-burst idle times may cause the control circuit to ramp up, and then ramp down, the pump output power in order to control the EDFA gain and/or power. Such an action could further introduce transient distortion to the burst signal due to slow response of the EDFA.

As explained in detail below, the present invention relates to an EDFA circuit which is capable of compensating for burst mode operation over a wide dynamic range in the upstream direction of a PON design, and a method for controlling such an EDFA circuit.

Fig. 4 illustrates an exemplary embodiment of an EDFA circuit 40 of the present invention. The EDFA circuit 40 contains the same basic configuration as the EDFA circuit illustrated in Fig. 3 (which are indicated by the same reference numerals), but includes the following additional components. Referring to Fig. 4, the additional components include a gain control unit 42 disposed along the main signal line at the input of the EDFA circuit and a WDM 49 disposed along the main signal line at the output of the EDFA circuit. The gain control circuit 42 comprises coupler1 43 and coupler2 44 disposed along the main signal line; a photodetector PD3 45, which receives the output of coupler1 43 as an input signal; a "dummy" laser 46, which has an output coupled to coupler2 44; and a gain control circuit 47, which receives input signals from photodetector PD3 45 and photodetector PD1 31, and provides a control signal to the dummy laser 46. The dummy laser 46 operates at wavelength λ_{d}, which is outside the upstream signal window, but still in the EDFA amplification range. For example, in one embodiment, the upstream signal is in the 1540 nm to 1560 nm window, and the wavelength of the dummy laser 46 is between 1529 nm and 1539 nm.

In operation, the photodetector PD3 45 detects the PON upstream data signal through coupler1 43. The signal produced by the dummy laser 46 is combined with the input data signal (i.e., upstream signal) and placed on the main signal line of the EDFA by coupler2 44. This combined signal is detected by photodetector PD1 31 through coupler3 33 and is utilized used by both the gain control circuit 47 and the EDFA control circuit 35 as explained herein. In addition, at the output of the EDFA, the WDM filter 49 allows the dummy laser signal to be "dumped", i.e., removed from the amplified output of the EDFA 40.

It is noted that the inclusion of the dumping WDM filter 49 in the circuit configuration is optional. For example, if multiple EDFAs are needed in an amplified PON design, the dummy signal can be allowed to propagate with the burst signal to the next EDFA, which does not need to have its own dummy laser. Further, the dummy laser may also be modulated for use in a simplex communications channel, as will be described further below.

In a PON design, the upstream channel may be idle for a period of time, at which times there is no input data signal detected by PD3 45. During such periods, the dummy laser 46 provides the only input signal to the EDFA amplifier circuit via coupler2 44. The EDFA control circuit 35, using the signals detected by input detector PD1 31 and output detector PD2 32, establishes the pre-determined gain or power, using the dummy laser input signal power level as its input. The gain control circuit 47, utilizing the input power signals from photodetectors PD3 and PD1, monitors the power signal level input into the EDFA amplifier circuit and generates the control signal which is coupled to the dummy laser 46 and which sets the dummy laser output power to a level such that the input to the EDFA amplifier circuit will be at the pre-determined gain or power level. During operation, the gain control circuit 47 will continue to adjust the output power level of the dummy laser 46 so as to maintain the input power level at the predetermined level. By performing the foregoing operation, the input power level to the EDFA amplifier circuit is maintained even when the upstream signal exhibits a burst mode of operation, and as a result, there is no signal degradation resulting from a burst mode input signal as occurs in the prior art devices. Finally, the WM filter 49 operates to remove the dummy laser signal from the output signal of the EDFA.

There are various ways of controlling the dummy laser to obtain the foregoing objective. The preferred methods are discussed below.

In a first embodiment, the dummy laser 46 is controlled by the gain control circuit 47 so as to operate at a pre-determined power level, which is greater than the largest anticipated burst input signal level. The EDFA is operated in a deep saturation mode, where the gain is clamped by the dummy laser 46 and the EDFA reaches its saturated output power level. In this manner, the EDFA will achieve substantially constant gain despite the large dynamic range of the input signal. Thus, the EDFA's operating point is largely determined by the dummy laser signal, and the upstream signal is relatively small perturbation to its operation.

As an example, if the desired optical power of the amplified signal from any ONU 12 is 6 dBm or slightly less, the output power of the dummy laser 46 may be set to a pre-determined level, such that its amplified power level is 12 dBm. The total power at the output of the EDFA is 13 dBm (i.e., 6 dBm = 4 mW, 12 dBm = 16 mW, 4 mW+16 mW = 20 mW = 13 dBm). The EDFA can operate in either the APC or AGC mode. With these parameters, the input power to the EDFA can vary by no more than 1 db, regardless of whether a burst is being transmitted on the PON at any time. Therefore, at the output of the EDFA, the optical power at the leading edge of a burst differs by less than 1 dB from the optical power at the trailing edge.

Since the dummy laser operates at a pre-determined power level (rather than being adjusted which is described below as another option), this embodiment is relatively easy to implement, and has relatively few possible failure modes, resulting in more robust operation. It is noted that photodetector PD1 and coupler1 may be omitted from the circuit design in this embodiment.

In a variation to the foregoing control method, in a second , third, and fourth embodiment of the present invention, the dummy laser 46 is adjusted to compensate for differences in the average input signal level, such that the total input to the EDFA is constant.

In a second embodiment, the average output power of the dummy laser 46 is adjusted, using pulse width modulation, by the gain control circuit 47, (i.e. the control signal output by the gain control circuit 47 comprises a series of on/off pulses of variable duty cycle and a pre-determined amplitude, applied at a pre-determined rate). The pulse rate should be greater than the EDFA response time, e.g., 10 MHz. In this embodiment, when there is no upstream data signal, the pulse width (i.e., the 'on' part of the duty cycle) is at a pre-determined maximum; e.g., for the 10 MHz rate, the pulse width will be 100 ns. When photodetector PD3 43 detects an upstream data signal, the gain control circuit 47 shortens the pulse width of the control signal coupled to the dummy laser 46, thereby shortening the amount of time the dummy laser 46 is ON, such that the total average input power to the EDFA amplifier circuit is constant. For example, if the upstream data signal level at PD3 is at 50% of a pre-determined maximum, the dummy laser pulse width is set to 50 ns. Therefore, the combined upstream data signal and dummy laser have same average power at the input to the EDFA amplifier circuit, and the amplified upstream signal will not experience distortion due to EDFA transient response.

In a third embodiment, the power level of the dummy laser 46 is adjusted over a continuous range using analog control circuitry. The adjustments are made so as to compensate for the difference between the received power levels of consecutive bursts, measured at photodetector PD3 45, such that the input to the EDFA amplifier circuit is held constant. The response of photodetector PD3 45 should be faster than that of the EDFA, e.g., its bandwidth must be at least 1 MHz. Based on the power level measured by photodetector PD3 45, the gain control circuit 47 inverse modulates the control signal coupled to the dummy laser 46 with a modulation depth so as to control the output of the dummy laser 46 such that the sum of the measured burst received power level and modulated dummy laser output power are constant at the input to the EDFA amplifier circuit. It is noted that the third embodiment may be considered to be an improvement over the first embodiment if the modulation depth of the dummy laser is small and its minimum output power is much greater than the maximum burst received power level.

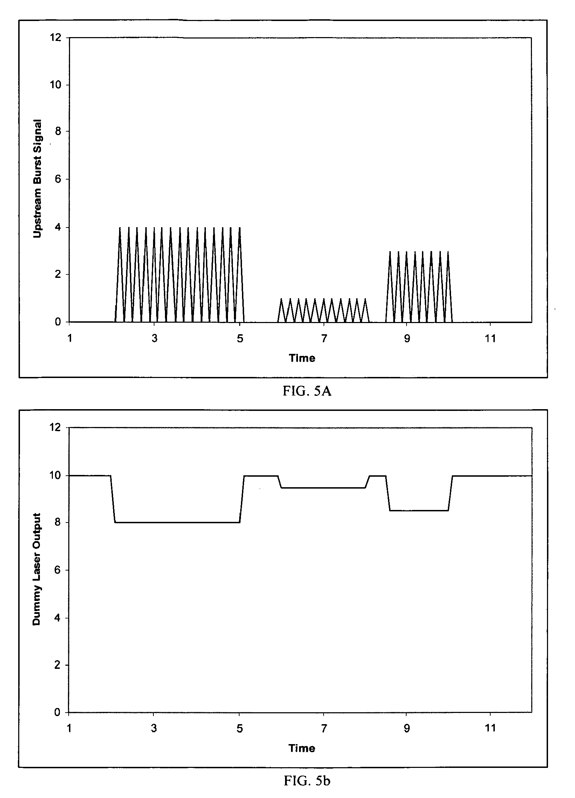

Fig. 5a illustrates an example of an upstream burst data signal that may be input into the EFDA. Fig. 5b illustrates the corresponding adjusted dummy laser signal generated by the present invention in accordance with the given embodiment. As shown, the adjusted signal is the inverse of the power level of the upstream burst signal. As such, the average combined optical signal at the EDFA amplifier circuit input is substantially constant. It is important to note that the EDFA will only process the average power due to its slow response time. As such, the upstream signal will not experience large signal distortion due to the EDFA amplification. Also, the EDFA pumps 36, 37 will not need to rapidly change due to the different level of the upstream burst data signal. The pump control only needs to be adjusted slightly and slowly so as to maintain the constant gain or power level at the output. Finally, it is noted that the output of photo detector PD1 31 is also used to control the bias of the dummy laser 46 to offset any slow drift of the dummy laser average power due to aging, and that such control should be much slower than the modulation speed since it is used for adjusting long term laser power drift.

To expand on the example set forth above in conjunction with the first embodiment, where the desired amplified burst signal level at the output of the EDFA is 4 mW (6 dBm), and the dummy laser output power level is set to a level such that its signal appears at the output of the EDFA at 16 mW (12 dBm), the combined signal ' level at the output of the EDFA is 20 mW (13 dBm). In order to maintain this 13 dBm combined signal level when there is no upstream burst signal, the output signal level of the dummy laser 46 must be increased with a modulation depth of about 11.1%. By doing so, the EDFA will not experience fluctuations in either its input or output power levels, and as a result, it will not distort the upstream burst signal.

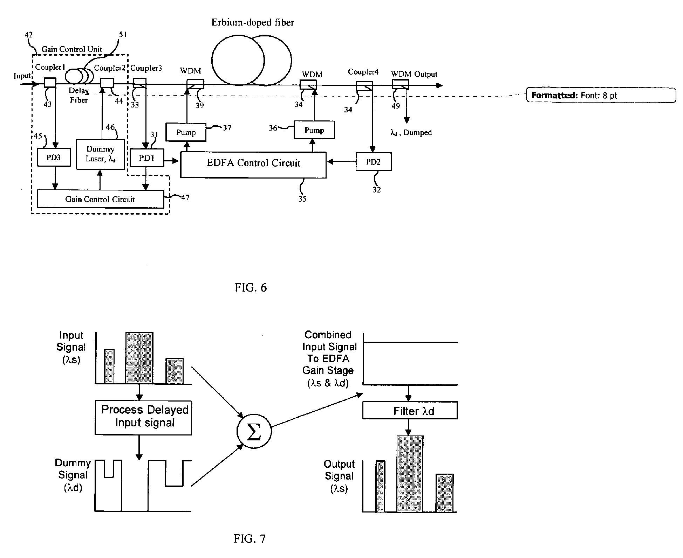

In a fourth embodiment of this invention, the input signal to the EDFA is delayed after detection by the photodetector PD3 45 to provide the gain control circuit 47 additional time to adjust the amplitude of the output of the dummy laser 46. Fig. 6 illustrates an exemplary embodiment of the fourth embodiment of the present invention. Referring to Fig. 6, the fourth embodiment is substantially the same as the first embodiment, with the exception that a delay element 51 has been added to the main signal line between coupler1 43 and coupler2 44. In the given embodiment, the delay element 51 is an optical delay element formed by the insertion of an optical fiber between the couplers 43 and 44, where the length of the fiber is determined by the desired delay and speed of propagation of the fiber.

By inserting the additional delay element in accordance with the fourth embodiment, it is possible to provide the gain control circuit 47 sufficient time to more accurately process and match the amplitude, tilt and timing characteristics of the dummy laser output. Thus, this allows for the minimization in the fluctuations (i.e., distortions) of the amplified EDFA output by providing a very constant average optical power level into the gain section of the EDFA.

Fig. 7 illustrates the operation of the device illustrated in Fig. 6. Specifically, Fig. 7 illustrates the combination of the original delayed input signal with the optimized modulated dummy laser signal, resulting in a constant average optical power level to the input of the gain stage of the EDFA. The resulting signal output by the EDFA is an amplified copy of the original input signal, virtually free of distortions caused by the previously described burst mode upstream TDMA signal.

As discussed above, and shown in each of the foregoing embodiments, the dummy laser signal may be "dumped" at the output of the EDFA by utilizing WDM filter 49, if the dummy laser signal it is not needed for use by a second EDFA. However, in a variation to the foregoing embodiments, the dummy laser signal may have a second use, and therefore need not be dumped. One example of a second use of the dummy laser signal is now described.

It is known that telecommunications devices in remote locations must be centrally monitored for proper operation. Examples of EDFA operational parameters to be monitored may include, but not limited to, signal input power level, output power level, pump output power level, pump current, pump temperature, enclosure temperature, and enclosure door opening. An ONU can be dedicated for monitoring each EDFA. While such an approach is feasible, it is also disproportionate to the amount of data which needs to be sent, and reduces the usable split ratio of the PON (e.g., from 128:1 to 127:1), both of which are undesirable.

In accordance with an embodiment of the present invention, the dummy laser signal can be utilized in the monitoring process. More specifically, the dummy laser signal can be modulated with a data signal so to yield a simplex communications channel capable of carrying status monitoring messages for the EDFA. To make the dummy laser signal appear constant to the EDFA, modulation must be performed at a relatively high rate, e.g., 10 Mb/s or 100 Mb/s. Inexpensive transceivers capable of such modulation are commercially available to perform this function. At the central office OLT, the dummy laser signal may be split from the upstream signal using a WDM filter, demodulated, e.g., using a commercially available receiver, processed and forwarded to an operations and maintenance center. When applied to the first or third embodiment noted above, the modulation is not significant to the EDFA, since it only imperceptibly affects the average output power of the dummy laser. When applied to the second preferred embodiment, the estimated duty cycle of the data modulation can be factored into the pre-determined duty cycle required to maintain a constant averaged input power, or the data modulation can be performed such that each symbol maintains the pre-determined duty cycle.

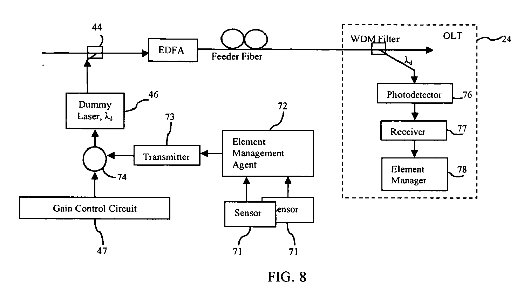

Fig. 8 illustrates an exemplary configuration which allows the use of the dummy laser signal for monitoring purposes. Specifically, Fig. 8 shows the additional components that allow for the foregoing function, and which can be added to any of the foregoing embodiments. It is noted that only the components of the previous configurations of the EDFA necessary to facilitate understanding of the operation of this embodiment, and the required additional components are illustrated in Fig. 8. Referring to Fig. 8, the device includes one or more sensors 71, which operate to monitor the values of operational parameters of the EDFA; an element management agent device 72, which may be implemented utilizing a microcontroller, and which operates to collect data from the sensors 71, and to format this received data into messages; a transmitter 73 which operates to place the messages formed by the element management agent 72 into a data packet of a pre-determined format, for example, but not limited to ethernet frames, serialize the message and transmit the messages as a bit stream at a pre-determined clock rate which is greater than the response time of the EDFA; and a coupler device 74 operative for combining the message data output by the transmitter 73 with the output of the gain control circuit 47, such that the gain of the dummy laser 46 is modulated when the transmitter 73 is active. At the OLT, the monitoring system further includes a WDM filter 75 which operates to extract the modulated signal from the dummy laser from the aggregate upstream signal. The modulated signal is then detected by a photodetector 76 and recovered and formatted into data packets by the receiver 77. An element manager unit 78 processes the messages in the data packets for further use in managing the EDFA and the operation thereof, as well as the PON. Receiver 77 and element manager 78 may be coupled by way of a data communications network, e.g., a local area network, which is not illustrated for simplicity purposes.

The processes described in connection with Figs. 5a-8 may be implemented in hard wired devices, firmware or software running in a processor. A processing unit for a software or firmware implementation is preferably contained in the gain control circuit 47 or also in-part in the EDFA control circuit 35. Any of these processes may be contained on a computer readable medium which may be read by gain control circuit 47 or also in-part in the EDFA control circuit 35. A computer readable medium may be any medium capable of carrying instructions to be performed by a microprocessor, including a CD disc, DVD disc, magnetic or optical disc, tape, silicon based removable or non-removable memory, packetized or non-packetized wireline or wireless transmission signals.

Those of skill in the art will appreciate that a computer readable medium may carry instructions for a computer to perform a method of controlling the power level input into an optical amplifier, the method comprising at least the steps of: detecting the power level of a burst signal to be input to an amplifier circuit of the optical amplifier, the burst signal being detected at an input port of said optical amplifier; coupling a dummy laser generation signal to the input port of the optical amplifier; and controlling the power level of a signal output by the dummy laser generation circuit so as to maintain the power level of a signal formed by the combination of said burst signal and the dummy laser generation signal at a substantially constant level, the combination signal being input to the amplifier circuit. The instructions may further include coupling at least a portion of said burst signal to a gain control circuit which is operative for controlling the power level of the signal output by said dummy laser generation circuit; coupling the output of the dummy laser generation circuit with the burst signal so as to form the combination signal; and coupling at least a portion of the combination signal to the gain control circuit.

The present invention provides significant advantages over the prior art systems. Most importantly, the present invention provides a PON network that provides for the processing of upstream burst data signals while maintaining a constant input power level to the EDFA contained in the PON network. The system also prevents a large dynamic transient response at the EDFA, and substantially eliminates distortion introduced by the transient response. Since the present invention allows amplification of the upstream signal, it provides for an increase of the allowable PON split ratio as compared to prior art systems.

Although certain specific embodiments of the present invention have been disclosed, it is noted that the present invention may be embodied in other forms without departing from the spirit or essential characteristics thereof. For example, it should be noted that the rare earth element Erbium, when used as a dopant in the manufacture of specialty optical fibers, exhibits physical properties consistent with amplified stimulated emission (ASE) in the C-band. Other rare earth dopants have been used to construct optical amplifiers that operate in other bands. Of particular interest are fibers doped with the element Praesodymium, which can be used to construct amplifiers operating in the optical window around 1300 nm. Praesodymium-doped fiber amplifiers (PDFAs) suffer the same problem with transient dynamic response as EDFAs, and the present invention applies equally to them.

Thus, the present embodiments are therefore to be considered in all respects as illustrative and not restrictive, the scope of the invention being indicated by the appended claims, and all changes that come within the meaning and range of equivalency of the claims are therefore intended to be embraced therein.

## Claims

1. An optical amplifier comprising:
an input port and an output port which are coupled together via a data signal line;
an amplifier circuit;
a gain control circuit coupled to said data signal line and operative for detecting the power level of a burst signal input into said optical amplifier at said input port; and
a dummy laser generation circuit having an output coupled to said data signal line and an input coupled to said gain control circuit;
wherein said gain control circuit is operative for controlling the power level output by said dummy laser generation circuit so as to maintain the power level of a signal input into said amplifier circuit at a substantially constant level.

2. The optical amplifier according to claim 1, further comprising:
a first coupler connected to said data signal line and operative for coupling at least a portion of said burst signal input to said gain control circuit;
a second coupler connected to said data signal line and operative for coupling said output of said dummy laser generation circuit to said data signal line; and
a third coupler connected to said data signal line and operative for coupling at least a portion of a signal output by said second coupler to said gain control circuit,
wherein said gain control circuit utilized the power level of the signal provided by said first coupler and the power level of the signal provided by said second coupler to determine the power level to be output by said dummy laser generation circuit.

3. The optical amplifier according to claim 1, wherein said gain control circuit controls said output power level of said dummy laser generation circuit such that the amplifier circuit operates in a saturation mode.

4. The optical amplifier according to claim 3, wherein said output power level of said dummy laser generation circuit is set at a predetermined level which is greater than power level of the burst signal input to the optical amplifier.

5. The optical amplifier according to claim 1, wherein said gain control circuit controls said dummy laser generation circuit so as to pulse-width modulate the output of said dummy laser generation circuit.

6. The optical amplifier according to claim 5, wherein said output of said dummy laser generation circuit is set to a predetermined maximum modulation level when no burst signal is present at said input port.

7. The optical amplifier according to claim 5, wherein when said power level of said burst signal is greater than zero, the gain control circuit controls the modulation applied to the output power level of said dummy laser generation circuit such that the combination of the output of the dummy laser signal and the burst signal forms a signal having a power level which is equal to said substantially constant level.

8. The optical amplifier according to claim 2, further comprising a delay element coupled between an output of said first coupler and an input of said second coupler.

9. The optical amplifier according to claim 1, wherein said amplifier circuit comprises:
at least one pump laser coupled to said data signal line; and
an amplifier control unit coupled to said at least one pump laser, said amplifier control circuit operative for controlling the output power of the at least one pump laser so as to maintain an output power level of said optical amplifier at a predetermined level.

10. The optical amplifier according to claim 1, wherein said amplifier circuit forms an erbium-doped fiber amplifier.

11. The optical amplifier according to claim 1, wherein said amplifier circuit forms a rare earth-doped fiber amplifier.

12. The optical amplifier according to claim 1, wherein said amplifier circuit forms a praesodymium doped fiber amplifier.

13. A method for controlling the power level input into an optical amplifier, said method comprising:
detecting the power level of a burst signal to be input to an amplifier circuit of said optical amplifier, said burst signal being detected at an input port of said optical amplifier;
coupling a dummy laser generation signal to said input port of said optical amplifier; and
controlling the power level of a signal output by said dummy laser generation circuit so as to maintain the power level of a signal formed by the combination of said burst signal and said dummy laser generation signal at a substantially constant level, said combination signal being input to said amplifier circuit.

14. The method according to claim 13, further comprising:
coupling at least a portion of said burst signal to a gain control circuit which is operative for controlling the power level of said signal output by said dummy laser generation circuit;
coupling said output of said dummy laser generation circuit with said burst signal so as to form said combination signal; and
coupling at least a portion of said combination signal to said gain control circuit.

15. The method according to claim 13, wherein said gain control circuit controls said output power level of said dummy laser generation circuit such that the amplifier circuit operates in a saturation mode.

16. The method according to claim 15, wherein said output power level of said dummy laser generation circuit is set at a predetermined level which is greater than the power level of the burst signal input to the optical amplifier.

17. The method according to claim 13, wherein said gain control circuit controls said dummy laser generation circuit so as to pulse-width modulate the output of said dummy laser generation circuit.

18. The method according to claim 17, wherein said output of said dummy laser generation circuit is set to a predetermined maximum modulation level when said burst signal is not present at said input port.

19. The method according to claim 17, wherein when said power level of said burst signal is greater than zero, the gain control circuit controls the modulation such that said combination signal has a power level which is equal to said substantially constant level.

20. The method according to claim 14, further comprising the step of providing a delay element so as to delay said burst signal by a predetermined amount prior to combining said burst signal with said output of said dummy laser generation circuit.
